Europäisches Patentamt

European Patent Office

Office européen des brevets

(19)

(11) **EP 0 675 348 B1**

(12) **FASCICULE DE BREVET EUROPEEN**

(45) Date de publication et mention
de la délivrance du brevet:
**01.12.1999 Bulletin 1999/48**

(51) Int Cl.⁶: **G01K 11/20**

(21) Numéro de dépôt: **95400660.7**

(22) Date de dépôt: **24.03.1995**

(54) **Dispositif de mesure optique de température cryogénique**

Vorrichtung zur optischen Messung von Kryogentemperaturen

Device for optical measurement of cryogenic temperatures

(84) Etats contractants désignés:
**CH DE ES GB IT LI**

(30) Priorité: **30.03.1994 FR 9403797**

(43) Date de publication de la demande:
**04.10.1995 Bulletin 1995/40**

(73) Titulaire: **SOCIETE NATIONALE D'ETUDE ET DE CONSTRUCTION DE MOTEURS D'AVIATION, "S.N.E.C.M.A."**
**75015 Paris (FR)**

(72) Inventeurs:
- **Rouhet, Jacky Y.**
  **F-27950 Saint Marcel (FR)**
- **Tribillon, Gilbert M.**
  **F-25000 Besançon (FR)**
- **Bertrand, Stéphane**
  **F-25000 Besançon (FR)**
- **Boulon, Georges**
  **F-69005 Lyon (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A- 0 175 352        US-A- 4 895 156**

- **OPTICS AND SPECTROSCOPY, vol. 41, WASHINGTON US, page 615 KAPLYANSKII E.A. 'SPECTRA, KINETICS, AND POLARIZATION OF THE LUMINESCENCE OF CaF/sub2 - Yb/sub2+ crystals'**
- **JOURNAL OF THE ELECTROCHEMICAL SOCIETY, vol. 117, MANCHESTER, NEW HAMPSHIRE US, page 87 PALILLA E.A. 'FLUORESCENCE PROPERTIES OF ALKALINE EARTH OXYANIONS ACTIVATED BY DIVALENT YTTERBIUM'**
- **APPLIED OPTICS, vol. 30, NEW YORK US, page 2670 L. MANNIK E.A. 'PHOSPOR-BASED THERMOMETRY OF THE ROTOR IN A HIGH-POWER ELECTRICAL GENERATOR'**
- **IEEE TRANSACTIONS ON INSTRUMENTATION AND MEASUREMENT, vol. 37, NEW YORK US, page 637 ALLISON E.A. 'MONITORING PERMANENT-MAGNET MOTOR HEATING WITH PHOSPOR THERMOMETRY'**
- **REVIEW OF SCIENTIFIC INSTRUMENTS, vol. 62, NEW YORK US, page 1210 GRATTAN E.A. 'DEVELOPMENT OF A HIGH-TEMPERATURE FIBER-OPTIC THERMOMETER PROBE USING FLUORESCENT DECAY'**

# Description

## DOMAINE DE L'INVENTION

La présente invention se rapporte à un dispositif de mesure de températures cryogéniques de 20 à 120 K (températures correspondant notamment à l'oxygène et à l'hydrogène en phase liquide) par des techniques optiques mettant en oeuvre des cristaux photoluminescents.

## ART ANTERIEUR

La mesure des températures à l'aide de cristaux photoluminescents est aujourd'hui bien connue et repose sur le fait que la durée du déclin exponentiel de la luminescence émise par un luminophore cristallin varie avec la température lorsque celui-ci est excité optiquement par une source lumineuse.

La demande de brevet EP 0 259 027 divulgue un tel dispositif de mesure optique utilisant un luminophore à base d'oxyde d'aluminium dopé au chrome. Le brevet US 4 895 156 qui décrit un autre exemple d'application d'un tel dispositif dans le domaine médical fait référence dans sa description à de multiples articles et documents de brevet se rapportant à ce sujet et qui démontrent que de nombreux cristaux sont disponibles pour couvrir une large gamme de températures.

Malgré cette abondante littérature, et bien qu'il en existe un besoin industriel, il n'a jamais été proposé un capteur de température permettant des mesures performantes, c'est à dire avec des temps de réponse inférieurs à la milliseconde et des cadences d'acquisition pouvant aller jusqu'à 1000 mesures par seconde, dans des conditions d'environnement extrêmes combinant des températures cryogéniques de 20 à 120 K et des pressions élevées jusqu'à 200 bars.

## DESCRIPTION DE L'INVENTION

La présente invention a pour but la réalisation d'un tel dispositif de mesure optique de température. Un autre but de l'invention est de permettre aussi bien la mesure de température de fluides en mouvement que celle de surfaces mobiles, avec des vitesses d'écoulement ou de déplacement élevées de l'ordre de 100 à 300 m/s. Encore un autre but est de réaliser un dispositif simple, robuste et fiable permettant de plus des mesures en des endroits difficiles d'accès. Plus particulièrement, le dispositif selon l'invention doit être adapté à la mesure de fluides très oxydants comme l'oxygène par exemple.

Ces buts sont atteints par un dispositif de mesure optique de températures de fluides cryogéniques ou de surfaces mobiles dans de tels fluides par analyse du déclin de la luminescence d'un cristal dopé, ce dispositif comportant une source lumineuse d'excitation dudit cristal, une fibre optique pour transporter le flux lumineux émis par cette source jusqu'au cristal et pour retransmettre vers un ensemble de détection l'émission lumineuse luminescente du cristal en résultant, et une sonde de mesure en regard de laquelle le fluide ou la surface mobile se déplace, caractérisé en ce que le cristal dopé est soit un fluorure de strontium dopé à l'ytterbium divalent (SrF2:Yb2+) soit un fluorure de calcium dopé à l'ytterbium divalent (CaF2:Yb2+).

En choisissant ces deux types de luminophore et en utilisant leurs propriétés aux basses températures, il est possible de réaliser un dispositif optique de mesure de températures dans des environnements extrêmes ayant une très bonne précision.

Dans un premier mode de réalisation de l'invention plus particulièrement destiné à la mesure de températures de surfaces mobiles dans un fluide cryogénique, la sonde de mesure de ce dispositif est constituée par un boîtier dans lequel est placé un capillaire métallique entourant au moins une fibre optique de transmission du flux lumineux émis par la source lumineuse et de retransmission de l'émission lumineuse renvoyée par le cristal dopé, et le cristal dopé est présent sous la forme d'un revêtement cristallin recouvrant un endroit déterminé de la surface à explorer.

La présence d'un capillaire métallique entourant la fibre optique permet, en limitant le temps de réponse thermique de la sonde, d'obtenir des mesures particulièrement performantes tout en lui assurant une parfaite rigidité nécessaire pour son utilisation à des pressions et avec des vitesses d'écoulement élevées.

De préférence, la sonde de mesure comporte en outre une fibre optique de transmission et de réception d'une émission lumineuse de synchronisation et la surface à explorer comporte en outre au moins une marque réfléchissant cette émission lumineuse placée dans le sens de déplacement de la surface à une distance déterminée du revêtement cristallin.

Ainsi, il devient possible de réaliser une mesure en un endroit prédéterminé de la surface à explorer sans nécessité de revêtir toute cette surface du luminophore. De plus, pour les corps tournants, une mesure annexe de vitesse n'est plus indispensable pour la synchronisation des mesures de températures.

La sonde de mesure peut comporter une fibre bidirectionnelle unique entourée par un capillaire métallique, l'ensemble étant monté dans le boîtier ou bien encore une fibre de transmission du flux lumineux émis par la source lumineuse et au moins une fibre réceptrice de retransmission de l'émission lumineuse renvoyée par le revêtement cristallin, ces fibres étant entourées chacune par un capillaire métallique.

Avantageusement, le boîtier comporte en outre une lentille optique placée en sortie de la ou des fibres optiques.

Afin d'augmenter les performances des sondes précitées aux faibles vitesses, un moyen de focalisation complémentaire peut être disposé entre la sonde et la surface à explorer, en sortie des fibres réceptrices.

Lorsque la sonde comporte une fibre de synchronisation, la source lumineuse d'excitation est commandée à partir d'un dispositif détecteur recevant le flux lumineux émis par un émetteur de synchronisation et retransmis par les marques réfléchissantes, l'ensemble de détection recevant successivement les émissions luminescentes émises par le revêtement cristallin au travers de chacune des fibres réceptrices, et le dispositif selon l'invention comporte en outre un circuit de traitement recevant des informations de la source lumineuse, de l'ensemble de détection et d'une mémoire contenant un ensemble de valeurs prédéterminées.

Le dispositif selon l'invention permet une mesure entièrement automatique de la température en un endoit déterminé et la présence de marques réfléchissantes en faisant ressortir une exacte connaissance de la vitesse de déplacement du corps permet d'une part d'adapter la mesure à cette vitesse en choisissant les fibres réceptrices devant être prises en compte pour la mesure et d'autre part de déclencher la source laser d'excitation au moment opportun.

Le circuit de traitement comporte un premier circuit de détermination de la durée de déclin $\tau$ de la luminescence du revêtement cristallin et un deuxième circuit de calcul de la température de la surface à explorer à partir des valeurs emmagasinées dans la mémoire. Il peut en outre comporter un troisième circuit de calcul de la vitesse de déplacement de la surface à explorer.

Dans un second mode de réalisation destiné à la mesure de fluides cryogéniques en mouvement, la sonde de mesure est constituée d'un boîtier au fond duquel est placé le cristal dopé, un capillaire métallique entourant une fibre optique de transmission du flux lumineux émis par la source lumineuse et de retransmission de l'émission lumineuse renvoyée par le cristal dopé étant placé dans ce boîtier au contact du cristal dopé.

Par cette structure, il est possible d'obtenir des sondes de très petites dimensions et particulièrement robustes du fait de la présence d'un capillaire de nature métallique, ce dernier autorisant de plus des temps de réponse pour la mesure particulièrement courts.

Dans une variante de réalisation, la sonde de mesure est constituée d'un boîtier sur le fond duquel est présent le cristal dopé sous la forme d'un revêtement cristallin, un capillaire entourant une fibre optique de transmission du flux lumineux émis par la source lumineuse et de retransmission de l'émission lumineuse renvoyée par le revêtement cristallin étant placé dans ce boîtier en regard de ce revêtement en définissant entre l'extrémité de cette fibre et le revêtement une chambre, et le boîtier comporte au moins un orifice d'entrée du fluide disposé perpendiculairement à l'axe de la fibre et débouchant dans la chambre et au moins un orifice de sortie du fluide opposé au précédent.

Du fait du contact direct entre le fluide et le luminophore, l'équilibre thermique de la sonde est atteint très rapidement et les temps de réponse obtenus peuvent être encore réduits. En outre, l'absence de contact entre la fibre et le luminophore n'impose pas le recours à un capillaire de nature métallique.

Avantageusement, la sonde de mesure comporte un unique orifice d'entrée et de sortie formé par une ouverture traversant le boîtier de part en part au niveau de la chambre.

De préférence, une lentille optique est placée en sortie de la fibre au niveau de la paroi de la chambre opposée au revêtement cristallin.

Bien entendu, et notamment pour la détermination de la température de corps tournants, le dispositif selon l'invention peut être mis en oeuvre avec une sonde unique de mesure comportant une fibre de synchronisation, une fibre de transmission et une seule fibre réceptrice comme avec plusieurs sondes de mesure (une sonde unique comme indiqué et des sondes munies chacune d'une seule fibre réceptrice) réparties autour du corps tournant et séparées les unes des autres d'un écart angulaire $\alpha$.

BREVE DESCRIPTION DES DESSINS

D'autres caractéristiques et avantages de la présente invention ressortiront mieux de la description suivante, faite à titre indicatif et non limitatif, en regard des dessins annexés, sur lesquels:

- la figure 1 montre les courbes d'excitation et de déclin de la luminescence d'un cristal dopé,
- la figure 2 est un schéma de principe général d'un dispositif de mesure optique de températures par analyse du déclin de la luminescence d'un cristal dopé,
- les figures 3, 4, 5a et 5b sont des exemples de sondes de mesure mises en oeuvre avec le dispositif de la figure 2 pour la mesure de températures de fluides en déplacement,
- les figures 6 et 7 sont des exemples de sondes de mesure mises en oeuvre dans le dispositif de la figure 2 pour la mesure de températures de surfaces en mouvement,
- la figure 8 est un autre exemple de sonde de mesure utilisant plusieurs fibres de réception de la luminescence du cristal excité,
- la figure 9 montre les courbes d'excitation et de déclin de la luminescence d'un cristal dopé dans le cas de la sonde de la figure 8,
- la figure 10 montre schématiquement une variante de réalisation de la sonde de la figure 8 destinée aux mesures à faible vitesse de déplacement,
- la figure 11 est un schéma de principe de l'ensemble de traitement des signaux d'une sonde de mesure du type de la figure 8,
- les figures 12 et 13 montrent différents signaux caractéristiques de l'ensemble de traitement de la figure 10, et
- la figure 14 présente schématiquement la configuration de plusieurs sondes de mesure disposées au voisinage d'un corps tournant.

DESCRIPTION DE MODES DE REALISATION PREFERENTIELS

Le principe de base de la mesure de températures par cristaux photoluminescents et fibre optique est bien connu et repose sur la mesure de la durée de déclin $\tau$ de l'émission lumineuse luminescente d'un luminophore cristallin après que celui-ci a été excité optiquement par une impulsion lumineuse délivrée par une source lumineuse comme une lampe au Xénon ou une diode électroluminescente par exemple.

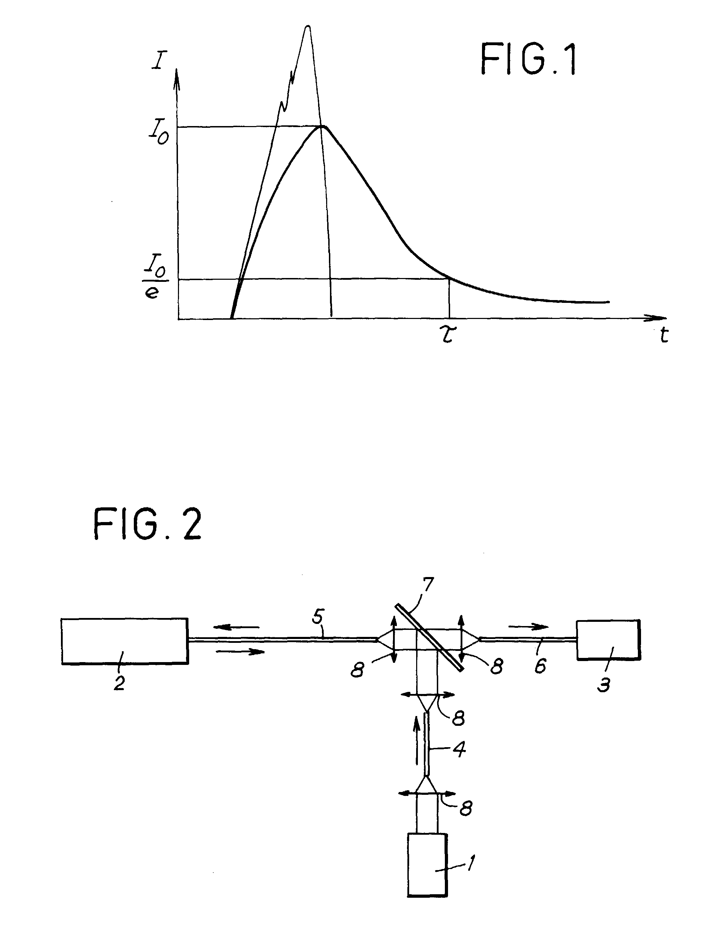

Le déclin de la luminescence est du type exponentiel (voir figure 1):

$$I = I_0\, e^{-t/\tau}$$

avec $\tau$ = durée de déclin qui dépend de la température et du cristal utilisé.

La figure 2 montre un schéma de principe d'un exemple de dispositif de mesure mettant en oeuvre la méthode de mesure de températures précitée. Ce dispositif comporte d'une part une source lumineuse d'excitation 1 qui émet des impulsions de lumière à destination d'un cristal dopé constituant l'élément actif d'une sonde de mesure 2 et d'autre part un détecteur de luminescence 3 qui reçoit l'émission lumineuse luminescente émise en retour par ce cristal dopé. Des fibres optiques 4, 5, 6 assurent la transmission de l'impulsion lumineuse excitatrice vers la sonde et le retour de l'émission lumineuse du cristal vers le détecteur. Avantageusement, pour limiter le nombre de fibres utilisé dans le dispositif, un séparateur 7 est disposé en entrée de la fibre de mesure bidirectionnelle 5 aboutissant à la sonde 2. Si nécessaire, des moyens de focalisation 8 permettent de focaliser la lumière en entrée et en sortie des différentes fibres optiques.

Les inventeurs ont pu constater qu'avec les luminophores utilisés actuellement le dispositif précédent ne permettait pas de réaliser des mesures performantes dans des conditions extrêmes d'environnement. Notamment, il n'existait pas à ce jour un dispositif de mesure de températures de fluides ou de surfaces mobiles évoluant dans des gammes de températures de 20 à 200 K et de pression pouvant aller jusqu'à 200 bars. Aussi, les inventeurs ont mis au point deux cristaux dopés à l'ytterbium divalent, l'un de fluorure de strontium (SrF2:Yb2+) et l'autre de fluorure de calcium (CaF2:Yb2+) qui présentent de bonnes caractéristiques aux basses températures et qu'ils ont utilisés pour réaliser un dispositif de mesure spécialement adapté. Le premier luminophore est de préférence mis en oeuvre dans une première plage de températures de 20 à 80 K, le second dans une seconde de 80 à 120 K. Ces luminophores présentent l'avantage d'avoir une très bonne sensibilité aux basses températures et des durées de déclin assez faibles (< 1 ms) pour permettre des cadences d'acquisition jusqu'à 1000 mesures par seconde, mais toutefois suffisamment élevées pour s'affranchir des luminescences parasites de très faibles durées. L'excitation de ces luminophores est réalisée par une source laser émettant dans l'ultra violet à une longueur d'onde voisine de 350 nm, l'émission photoluminescente en résultant apparaissant dans le spectre visible respectivement autour de 650 nm (SrF2:Yb2+) et de 560 nm (CaF2:Yb2+).

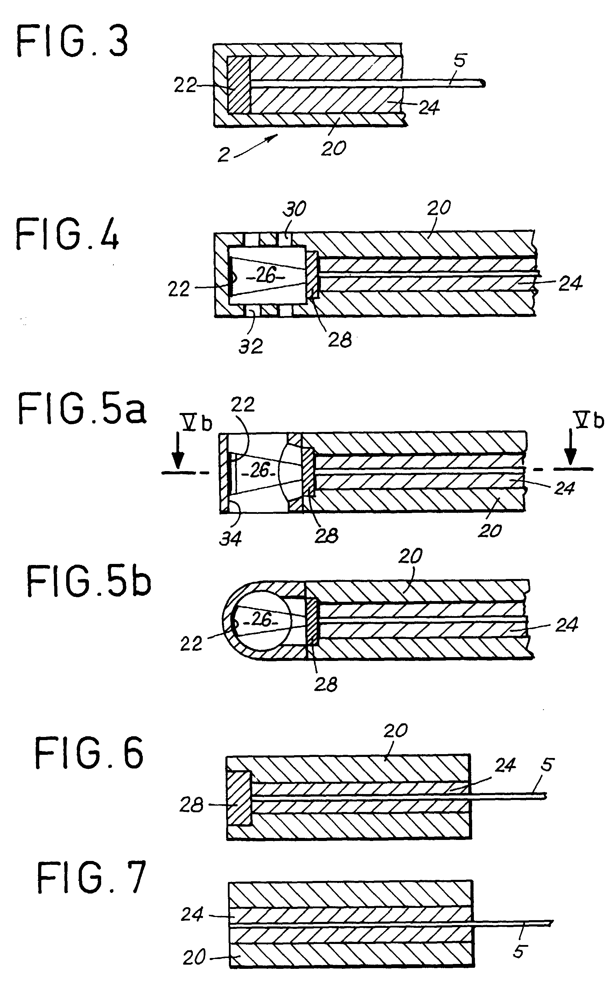

Pour la mesure de la température de fluides cryogéniques la sonde de mesure 2 peut avoir différentes structures comme représentées aux figures 3 à 5b.

Sur la figure 3, la sonde 2 comporte un boîtier 20 en forme de tube au fond duquel est placé le cristal dopé 22. Une capsule (capillaire) métallique 24 entourant l'extrémité libre de la fibre optique unique de mesure 5 et destinée à son maintien est collée contre le cristal et vient obturer ce boîtier. Le cristal est ainsi directement en contact avec l'extrémité de sortie de la fibre et se trouve protégé de l'action directe du fluide par son encapsulation dans le boîtier. De préférence, le fond de ce boîtier présente une épaisseur réduite mais suffisante pour assurer la rigidification de la sonde qui peut présenter ainsi de très faibles dimensions (de 2 à 10 fois le diamètre de la fibre optique, en pratique 2 à 3 mm) autorisant son utilisation dans des endroits difficiles d'accès. En outre, il est important de noter que le recours à un capillaire métallique permet de réduire le temps de réponse thermique de la sonde au contraire des capillaires en verre de l'art antérieur.

Sur la sonde de la figure 4, plus particulièrement adaptée à des écoulements à vitesse modérée tout en autorisant des temps de réponse très élevés (< 1 ms) du fait du contact direct entre le luminophore et le fluide, le fond du boîtier (qui constitue une cible pour le flux lumineux sortant de la fibre) est recouvert par un revêtement luminophore 22 qui forme une paroi d'une chambre 26 dont la paroi opposée à cette première paroi recevant le luminophore est constituée par une lentille optique 28 formant hublot et sur la face antérieure de laquelle est collé le capillaire 24 entourant la fibre 5. Cette chambre comporte des orifices d'admission (d'entrée) 30 et d'expulsion (de sortie) 32 du fluide la traversant disposés face à face perpendiculairement à l'axe de la fibre. Dans la figure 5a (et la figure 5b qui en est une vue en coupe selon le plan Vb-Vb), ces orifices sont remplacés par une ouverture unique 34 traversant le boîtier 20 de part en part au niveau de la chambre 26. Compte tenu de l'absence de contact entre le revêtement luminophore et la fibre optique, il n'est pas nécessaire que le capillaire soit métallique et un capillaire de verre peut donc être utilisé dans ces deux dernières versions. Par contre, le contact direct entre le fluide et le luminophore en n'exigeant pas qu'un équilibre thermique soit atteint avant de procéder à la première mesure, permet de réduire notablement le temps de réponse de la sonde.

Pour chacune de ces configurations, le revêtement luminophore est constitué d'une poudre des fluorures dopés précités mélangée avec une colle supportant les basses températures. Il peut être noté qu'un mélange de cette poudre avec une poudre d'oxyde métallique noyé dans la silice est également envisageable, ce mélange étant déposé sur le fond du boîtier par un procédé approprié.

Pour la mesure de la température de parois immobiles, la sonde de mesure peut être simplifiée comme le montrent les structures des figures 6 et 7.

Sur la figure 7, la structure de la sonde est limitée au boîtier 20 ouvert (sans fond) dans lequel est placé le capillaire métallique 24 entourant la fibre 5 dont l'extrémité libre fait ainsi face directement à la surface à explorer, alors que sur la figure 6, le boîtier 20 est fermé par la lentille optique formant hublot 28, la fibre et le capillaire qui l'entoure étant collés sur sa face antérieure. Dans ces deux configurations, le luminophore est présent sous la forme d'un revêtement directement sur la surface immobile à explorer qui fait face à l'extrémité de la sonde. Les types de revêtement utilisés sont bien sûr identiques aux précédents.

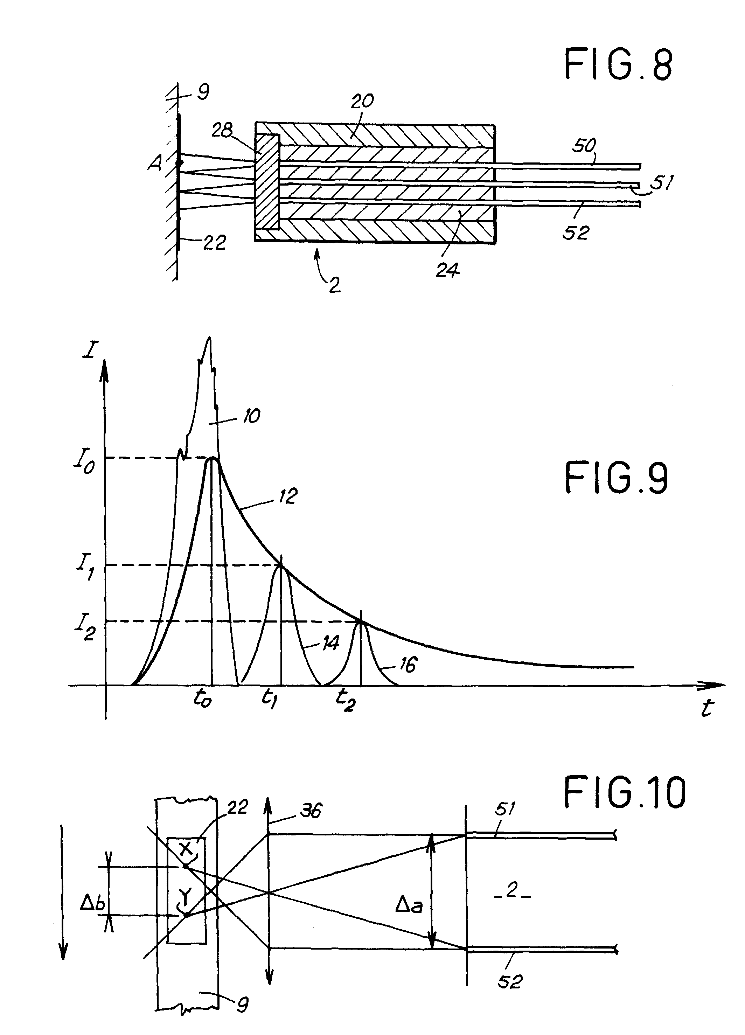

Au contraire, pour la mesure de températures à la surface de parois en mouvement de translation comme de rotation, il est proposé, en référence à la figure 8, une sonde de température comportant plusieurs fibres, l'une 50 assurant la transmission du flux lumineux issu de la source d'excitation 1 vers la paroi 9 considérée et les autres, par exemple deux fibres 51, 52 sans que ce nombre soit limitatif, recueillant et retransmettant vers un détecteur 3 l'émission luminescente du revêtement luminophore. Comme précédemment, ces fibres sont entourées d'un capillaire métallique 24 et éventuellement séparées de la paroi 9 par une lentille optique 28. Les fibres sont alignées dans le sens du déplacement de la paroi, la fibre de transmission du flux excitateur 50 précédant nécessairement les fibres réceptrices de l'émission luminescente 51, 52.

La figure 9 montre les signaux relevés en sortie des deux fibres réceptrices de la figure 8 par rapport au signal 10 d'excitation de la fibre de transmission et à la caractéristique 12 de déclin du luminophore. Le point A (voir figure 8) est excité au temps $t_o$ par le flux lumineux sortant de la fibre de transmission 50. A $t_o+\Delta t$ la première fibre réceptrice 51 recueille la luminescence du point A et à t1 $+\Delta t$ la seconde fibre réceptrice 52 fait de même. La durée de déclin $\tau$ est alors simplement proportionnelle au logarithme du rapport des flux lumineux (ou des intensités I lumineuses) reçus.

La sensibilité de sondes du type de la figure 8, c'est à dire avec une fibre de transmission et au moins deux fibres réceptrices, peut être améliorée dans le cas de mesure de températures de surfaces mobiles se déplaçant à faible vitesse par l'adjonction d'une lentille optique complémentaire 36 entre l'extrémité de la sonde 2 et la surface à explorer 9 (figure 10). Ainsi, il est possible, en plaçant cette lentille à une distance déterminée entre la paroi et la sonde, de mesurer la photoluminescence en deux points X et Y du revêtement luminophore 22 plus rapprochés que la distance $\Delta a$ séparant deux fibres successives. Plus la distance $\Delta b$ entre X et Y sera faible, plus il sera aisé de mesurer la température de la couche luminophore à des faibles vitesses de déplacement de la surface à explorer.

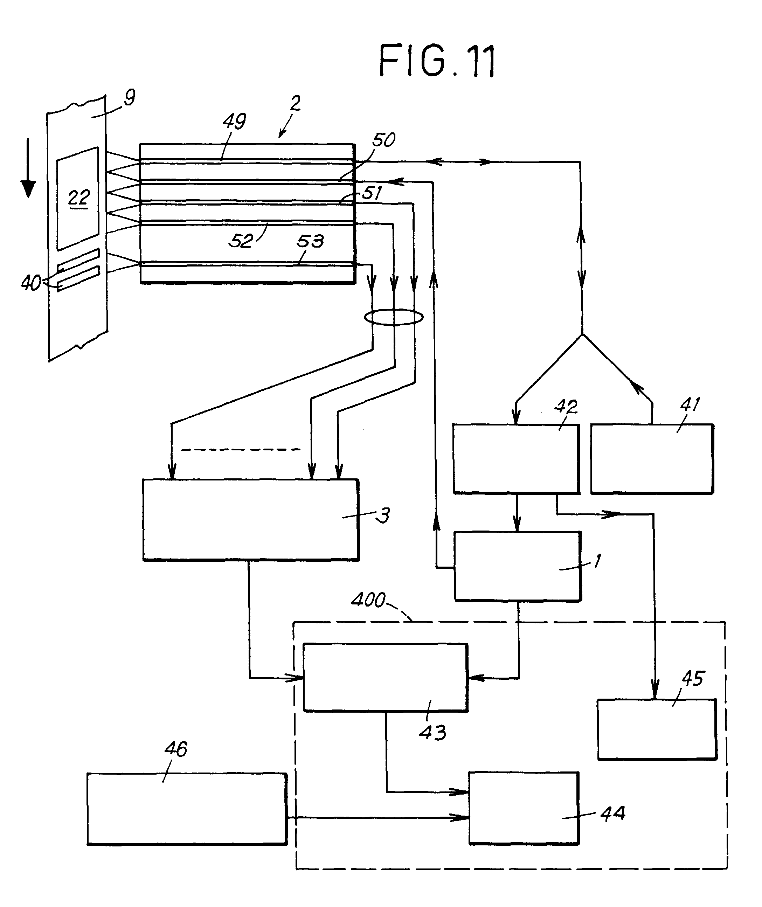

La figure 11 illustre schématiquement l'ensemble du dispositif de mesure de températures cryogéniques selon l'invention. La sonde 2 est placée en regard de la surface à explorer 9 qui doit être revêtue au moins partiellement du revêtement luminophore 22. De plus et de préférence, la surface 9 sera munie de marques réfléchissantes 40 séparées d'une distance déterminée et connue $\Delta x$ et placées à une distance déterminée du revêtement cristallin. La sonde comporte une fibre optique 49 de synchronisation qui est reliée d'une part à un émetteur de synchronisation 41 constitué avantageusement par une diode assurant une émission en continu dans le spectre visible ou infrarouge et d'autre part à un dispositif détecteur 42 assurant une détection de cette émission retransmisse par les marques réfléchissantes 40. Ce détecteur 41 délivre en sortie un signal de commande pour l'émetteur laser 1 qui fournit à un temps $t_o$ déterminé et fonction du passage des marques 40 le flux lumineux d'excitation du revêtement luminophore. Les fibres réceptrices 51, 52, 53, etc. de la sonde, en nombre déterminé mais variable selon la vitesse de déplacement envisagée, sont chacune reliées à l'ensemble de détection de la luminescence 3 qui délivre à des instants de passage t1, t2, t3, etc. l'intensité du flux lumineux reçu successivement par chacune des fibres 51, 52, 53, etc..Un premier circuit de calcul 43 permet, à partir d'une part des différentes intensités délivrées par l'ensemble 3 et d'autre part de la connaissance de l'instant $t_o$ de commande de la source laser 1, de calculer la durée de déclin $\tau$. La température de la surface 9 est ensuite obtenue par un deuxième circuit de calcul 44 qui la détermine en comparant cette durée de déclin $\tau$ à un ensemble de valeurs prédéterminées (obtenues par étalonnage préalable) emmagasiné préalablement dans une table ou mémoire 46. En outre, un troisième circuit de calcul 45 relié au détecteur 42 permet de déterminer simplement la vitesse de déplacement de la surface 9 à partir du temps écoulé entre le passage de deux marques réfléchissantes. De préférence, les différents circuits de calcul forment un circuit de traitement unique 400. Il peut être noté que la présence de fibres réceptrices en nombre élevé permet lors de la mesure de ne sélectionner que certaines d'entre elles, ce qui facilite alors le traitement des signaux. De même, comme précédemment, une lentille optique de focalisation complémentaire peut être placée devant les fibres réceptrices pour faciliter les mesures aux faibles vitesses.

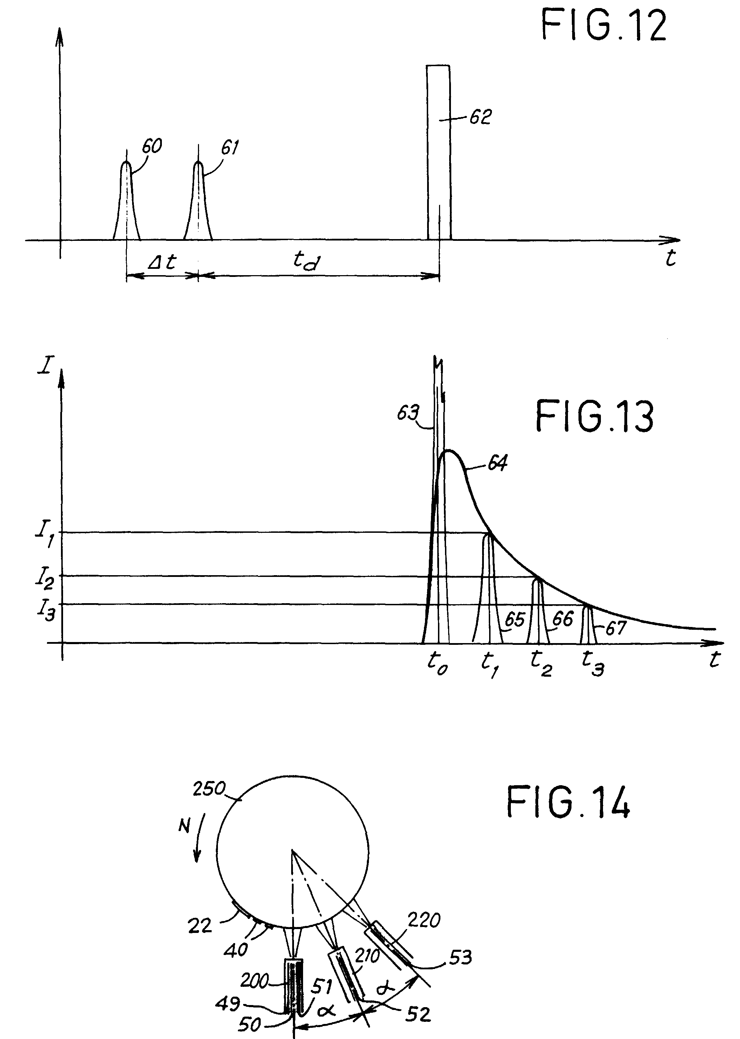

Les figures 12 et 13 permettent de mieux saisir le fonctionnement du dispositif de la figure 11. La fibre de synchronisation 49 véhicule la lumière visible ou IR émise par l'émetteur 41 et réfléchie 60, 61 par chacune des marques 40. Ces deux impulsions de lumière 60, 61 permettent, après un intervalle de temps td, la délivrance d'une impulsion 62 de commande de la source laser 1 dont l'émission très courte dans le spectre ultraviolet est alors effectuée à l'instant précis t0 de passage du revêtement luminophore devant la fibre de transmission 50 (la distance entre les marques 40 et le revêtement 22 est en effet connue). Celle-ci délivre à cet instant précis l'impulsion lumineuse 63 d'excitation du luminophore dont la luminescence 64 (fluorescence visible dans le cas des cristaux SrF2:Yb2+ et CaF2:Yb2+) est ensuite mesurée successivement 65, 66, 67, etc. par les différentes fibres réceptrices.

Dans le cas de mesures de température de corps tournants à très grande vitesse, la structure de la sonde 2 peut être limitée à la fibre de synchronisation 49, la fibre de transmission 50 et une seule fibre réceptrice, par exemple 51. Le déclenchement de la source laser à t0 après le passage des deux marques engendre l'excitation du revêtement luminophore présent sur le corps à un endoit déterminé de celui-ci et une première mesure est alors effectuée à t1, la seconde étant obtenue lors de la rotation suivante à t1+T (T étant la période de rotation du corps tournant). Selon la durée de déclin du luminophore et la vitesse de rotation du corps tournant, l'excitation du revêtement pourra ou non être réalisée à chaque tour.

Des calculs ont montré que des mesures de températures dans l'hydrogène liquide de corps tournant à des vitesses de rotation comprises entre environ 18 500 et 74 000 tours/ minute peuvent être effectuées avec un revêtement de fluorure de calcium dopé à l'ytterbium divalent et, que pour des vitesses comprises entre environ 256 500 et 1 025 600 tours/ minute, ces mesures peuvent également être réalisées avec un revêtement de fluorure de strontium dopé à l'ytterbium divalent. De même, dans l'oxygène liquide des mesures de températures avec un revêtement de fluorure de calcium dopé à l'ytterbium divalent sont possibles pour des vitesses comprises entre 150 000 et 600 000 tours/minute.

Afin d'élargir la gamme des vitesses de rotation exploitables et de réaliser ainsi une meilleure adaptation du dispositif de mesure aux conditions de fonctionnement du corps tournant 250, il est possible, comme le montre la figure 14, d'adjoindre à la sonde à structure simplifiée précédente 200 une ou plusieurs sondes réceptrices 210, 220 par exemple, réparties autour de ce corps tournant. Les sondes réceptrices 210, 220 ne comportent qu'une unique fibre optique 52, 53 de mesure de la luminescence. Ainsi, lors d'une rotation du corps tournant (pendant la période T), il peut être effectué un nombre de mesures égal au nombre de sondes disposées autour de ce corps. Toutefois, selon la vitesse de rotation, seules les intensités recueillies par certaines des sondes réceptrices seront exploitées.

Soit $\alpha$ la distance angulaire (en radians) entre deux sondes adjacentes 200, 210 ou 210, 220 et N la vitesse de rotation en tours/mn, le temps de passage entre deux sondes est donné par l'égalité suivante: $\Delta t = 30\alpha / \pi N$ ce qui, compte tenu de l'intervalle dans lequel les mesures sont exploitables,

$$\tau/2 < \Delta t < 2\tau$$

définit la plage suivante de vitesses de rotation mesurables:

$$15\alpha / \pi\tau < N < 60\alpha / \pi\tau$$

Des caractéristiques précédentes, il ressort que le champ d'application de la présente invention est particulièrement large tant en vitesse (10 à 1 000 000 tr/mn) qu'en pression (0 à 200 bars voire au delà selon la taille de la sonde). La mesure de températures de fluides cryogéniques ayant des vitesses d'écoulement allant jusqu'à 300m/s voire plus (selon la dimension des sondes) ainsi que celle de surfaces se déplaçant à ces vitesses dans un tel fluide est ainsi possible sans contraintes spécifiques. La structure particulière de la sonde de mesure autorise des mesures en ambiance déflagrante sans précaution particulière et sans risque de perturbations électromagnétiques. Dans sa version simplifiée, avec une fibre unique entourée d'un capillaire métallique, la sonde réceptrice est particulièrement compacte et robuste. En outre, les problèmes liés aux mesures dans des milieux très oxydants ou difficiles d'accès sont résolus simplement par la présente invention.

Le choix des luminophores adoptés dans le dispositif de mesure permet d'obtenir une très bonne sensibilité aux basses températures et une durée de déclin $\tau$ suffisamment faible pour autoriser des cadences d'acquisition élevées pouvant aller jusqu'à 1000 mesures par secondes, mais tout de même assez importante pour s'affranchir des luminescences parasites de très faible durée.

**Revendications**

1. Dispositif de mesure optique de températures de fluides cryogéniques ou de surfaces mobiles dans de tels fluides par analyse du déclin de la luminescence d'un cristal dopé, ce dispositif comportant une source lumineuse (1) d'excitation dudit cristal, une fibre optique (4, 5, 6; 50, 51, 52, 53) pour transporter le flux lumineux émis par cette source jusqu'au cristal et pour retransmettre vers un ensemble de détection (3) l'émission lumineuse luminescente du cristal en résultant, et une sonde de mesure (2; 200, 210, 220) en regard de laquelle le fluide ou la surface mobile se déplace, caractérisé en ce que le cristal dopé (22) est constitué soit par un fluorure de strontium dopé à l'ytterbium divalent (SrF2:Yb2+), soit par un fluorure de calcium dopé à l'ytterbium divalent (CaF2:Yb2+).

2. Dispositif de mesure optique de températures cryogéniques selon la revendication 1 plus particulièrement destiné à la mesure de températures de surfaces mobiles, caractérisé en ce que ladite sonde de mesure (2, 200) est constituée par un boîtier (20) dans lequel est placé un capillaire métallique (24) entourant au moins une fibre optique (5; 50) de transmission du flux lumineux émis par la source lumineuse (1) et de retransmission de l'émission lumineuse renvoyée par le cristal dopé, et en ce que le cristal dopé est présent sous la forme d'un revêtement cristallin (22) recouvrant un endroit déterminé de la surface à explorer (9).

3. Dispositif de mesure optique de températures cryogéniques selon la revendication 2, caractérisé en ce que la sonde de mesure (2) comporte en outre une fibre optique (49) de transmission et de réception d'une émission lumineuse de synchronisation et en ce que la surface à explorer (9) comporte en outre au moins une marque (40) réfléchissant cette émission lumineuse placée dans le sens de déplacement de la surface à une distance déterminée du revêtement cristallin (22).

4. Dispositif de mesure optique de températures cryogéniques selon la revendication 2, caractérisé en ce que ladite sonde de mesure comporte une fibre bidirectionnelle unique (5) entourée par un capillaire métallique (24), l'ensemble étant monté dans le boîtier (20).

5. Dispositif de mesure optique de températures cryogéniques selon la revendication 2 ou la revendication 3, caractérisé en ce que ladite sonde de mesure comporte une fibre de transmission (50) du flux lumineux émis par la source lumineuse (1) et au moins une fibre réceptrice (51, 52) de retransmission de l'émission lumineuse renvoyée par le revêtement cristallin (22), ces fibres étant entourées chacune par un capillaire métallique (24).

6. Dispositif de mesure optique de températures cryogéniques selon la revendication 5 en ce qu'elle dépend de la revendication 3, caractérisée en ce qu'elle comprend une unique fibre réceptrice (51).

7. Dispositif de mesure optique de températures cryogéniques selon les revendications 4, 5 ou 6, caractérisé en ce que le boîtier (20) comporte en outre une lentille optique (28) placée en sortie de la ou des fibres optiques (5; 49, 50, 51, 52).

8. Dispositif de mesure optique de températures cryogéniques selon la revendication 5 ou la revendication 7 en ce qu'elle dépend uniquement de la revendication 5, caractérisé en ce qu'il comporte en outre un moyen de focalisation complémentaire (36) disposé entre la sonde (2) et la surface à explorer (9) et placé en sortie des fibres réceptrices (51, 52).

9. Dispositif de mesure optique de températures cryogéniques selon la revendication 5 en ce qu'elle dépend de la revendication 3, caractérisé en ce que ladite source lumineuse d'excitation (1) est commandée à partir d'un dispositif détecteur (42) recevant le flux lumineux émis par un émetteur de synchronisation (41) et retransmis par les marques réfléchissantes (40), l'ensemble de détection (3) recevant successivement les émissions luminescentes émises par le revêtement cristallin (22) au travers de chacune des fibres réceptrices (51, 52, 53), et en ce qu'il comporte en outre un circuit de traitement (400) recevant des informations de la source lumineuse (1), de l'ensemble de détection (3) et d'une mémoire (46) contenant un ensemble de valeurs prédéterminées.

10. Dispositif de mesure optique de températures cryogéniques selon la revendication 9, caractérisé en ce que ledit circuit de traitement comporte un premier circuit (43) de détermination de la durée de déclin τ de la luminescence du revêtement cristallin (22) et un deuxième circuit (44) de calcul de la température de la surface à explorer (9) à partir des valeurs emmagasinées dans la mémoire (46).

11. Dispositif de mesure optique de températures cryogéniques selon la revendication 9, caractérisé en ce que le circuit de traitement (400) comporte en outre un troisième circuit (45) de calcul de la vitesse de déplacement de la surface à explorer (9).

12. Dispositif de mesure optique de températures cryogéniques selon la revendication 1, caractérisé en ce que ladite sonde de mesure est constituée d'un boîtier (20) au fond duquel est placé le cristal dopé (22), un capillaire métallique (24) entourant une fibre optique (5) de transmission du flux lumineux émis par la source lumineuse (1) et de retransmission de l'émission lumineuse renvoyée par le cristal dopé étant placé dans ce boîtier au contact du cristal dopé.

13. Dispositif de mesure optique de températures cryogéniques selon la revendication 1, caractérisé en ce que ladite sonde de mesure est constituée d'un boîtier (20) sur le fond duquel est présent le cristal dopé sous la forme d'un revêtement cristallin (22), un capillaire (24) entourant une fibre optique (5) de transmission du flux lumineux émis par la source lumineuse (1) et de retransmission de l'émission lumineuse renvoyée par le revêtement cristallin étant placé dans ce boîtier en regard de ce revêtement en définissant entre l'extrémité de cette fibre et le revêtement une chambre (26), et en ce que le boîtier comporte au moins un orifice (30, 34) d'entrée du fluide disposé perpendiculairement à l'axe de la fibre et débouchant dans la chambre (26) et au moins un orifice (32, 34) de sortie du fluide opposé au précédent.

14. Dispositif de mesure optique de températures cryogéniques selon la revendication 13, caractérisé en ce que la sonde de mesure (2) comporte un unique orifice d'entrée et de sortie formé par une ouverture (34) traversant le boîtier (20) de part en part au niveau de la chambre (26).

15. Dispositif de mesure optique de températures cryogéniques selon la revendication 13 ou la revendication 14, caractérisé en ce qu'une lentille optique (28) est placée en sortie de la fibre (5) au niveau de la paroi de la chambre (26) opposée au revêtement cristallin (22).

16. Dispositif de mesure optique de températures cryogéniques plus spécialement adapté à la détermination de la température de corps tournants, caractérisé en ce qu'il est mis en oeuvre avec une sonde unique de mesure (200) selon la revendication 6.

17. Dispositif de mesure optique de températures cryogéniques plus spécialement adapté à la détermination de la température de corps tournants, caractérisé en ce qu'il est mis en oeuvre avec plusieurs sondes de mesure (200, 210, 220) selon la revendication 4 ou la revendication 6, ces sondes étant réparties autour du corps tournant (250) et séparées les unes des autres d'un écart angulaire α.

## Patentansprüche

1. Vorrichtung zur optischen Messung von Temperaturen von Kryogenfluiden oder beweglichen Oberflächen in solchen Fluiden durch Analyse des Abklingens der Lumineszenz eines dotierten Kristalls, wobei diese Vorrichtung eine Lichtquelle (1) zum Anregen des Kristalls, eine optische Faser (4, 5, 6; 50, 51, 52, 53) zum Transportieren des Lichtflusses, der durch diese Quelle emittiert wurde, bis zum Kristall und zum Zurückleiten zu einer Detektoreinheit (1) für die Lumineszenzlichtemission des Kristalls als Ergebnis und eine Meßsonde (2; 200, 210, 220), gegenüber der sich das Fluid oder die bewegliche Oberfläche verschiebt, umfaßt,
dadurch gekennzeichnet, daß
der dotierte Kristall (22) entweder aus einem Strontiumfluorid, dotiert mit zweiwertigem Ytterbium (SrF2:Yb2+), oder einem Calciumfluorid, dotiert mit zweiwertigem Ytterbium (CaF2:Yb2+), besteht.

2. Vorrichtung zur optischen Messung von Kryogentemperaturen nach Anspruch 1, insbesondere ausgelegt zum Messen von Temperaturen von beweglichen Oberflächen, dadurch gekennzeichnet, daß die Meßsonde (2, 200) aus einem Gehäuse (20) besteht, in welchem eine metallische Kapillare (24) angeordnet ist, die wenigstens eine optische Faser (5; 50) zum Übertragen von Lichtfluß, der von der Lichtquelle (1) ausgesendet wurde, und zum Zurückübertragen von Emissionslicht, das durch den dotierten Kristall zurückgeworfen wird, umgibt, und daß der dotierte Kristall in Form einer kristallinen Bedeckung (22) vorliegt, die einen vorgegebenen Ort der zu untersuchenden Oberfläche (9) bedeckt.

3. Vorrichtung zur optischen Messung von Kryogentemperaturen nach Anspruch 2, dadurch gekennzeichnet, daß die Meßsonde (2) außerdem eine optische Faser (49) zum Übertragen und zum Aufnehmen einer Lichtemission zum Synchronisieren umfaßt und daß die zu untersuchende Oberfläche (9) außerdem wenigstens eine Marke (40) umfaßt, die dieses Emissionslicht reflektiert und in Richtung der Bewegung der Oberfläche in einem vorgegebenen Abstand von der kristallinen Bedeckung (22) angeordnet ist.

4. Vorrichtung zur optischen Messung von Kryogentemperaturen nach Anspruch 2, dadurch gekennzeichnet, daß die Meßsonde eine einzige bidirektionelle Faser (5) umfaßt, die umgeben ist durch eine metallische Kapillare (24), wobei die Einheit in dem Gehäuse (20) angeordnet ist.

5. Vorrichtung zur optischen Messung von Kryogentemperaturen nach Anspruch 2 oder Anspruch 3, dadurch gekennzeichnet, daß die Meßsonde eine Übertragungsfaser (50) für den Lichtfluß von der Lichtquelle (1) und wenigstens eine Aufnahmefaser (51, 52) zum Rückübertragen von Emissionslicht, zurückgeworfen durch die kristalline Bedeckung (22), umfaßt, wobei diese Fasern jeweils von einer metallischen Kapillare (24) umgeben sind.

6. Vorrichtung zur optischen Messung von Kryogentemperaturen nach Anspruch 5, soweit dieser sich auf Anspruch 3 bezieht, dadurch gekennzeichnet, daß sie eine einzige Aufnahmefaser (51) umfaßt.

7. Vorrichtung zur optischen Messung von Kryogentemperaturen nach den Ansprüche 4, 5 oder 6, dadurch gekennzeichnet, daß das Gehäuse (20) außerdem eine optische Linse (28) umfaßt, die am Ausgang der optischen Faser oder Fasern (5; 49, 50, 51, 52) angeordnet ist.

**8.** Vorrichtung zur optischen Messung von Kryogentemperaturen nach Anspruch 5 oder Anspruch 7, soweit dieser einzig von Anspruch 5 abhängt, dadurch gekennzeichnet, daß sie außerdem eine komplementäre Fokussierungsvorrichtung (36) zwischen der Sonde (2) und der zu untersuchenden Oberfläche (9) und am Ausgang der Aufnahmefasern (51, 52) angeordnet umfaßt.

**9.** Vorrichtung zur optischen Messung von Kryogentemperaturen nach Anspruch 5, soweit dieser von Anspruch 3 abhängt, dadurch gekennzeichnet, daß die Anregungslichtquelle (1) gesteuert wird durch eine Detektorvorrichtung (42), die den Lichtfluß empfängt, der von einem Synchronisationsemitter (41) ausgesendet wurde und durch Reflexionsmarken (40) zurückgeworfen wurde, wobei die Detektoreinheit (1) sukzessive die Lichtemissionen empfängt, die durch die kristalline Bedeckung (22) über jede der Aufnahmefasern (51, 52, 53) emittiert wurde, und daß sie außerdem einen Verarbeitungsschaltkreis (400) umfaßt, der Informationen von der Lichtquelle (1), der Detektoreinheit (3) und einem Speicher (46) mit vorgegebenen Werten empfängt.

**10.** Vorrichtung zur optischen Messung von Kryogentemperaturen nach Anspruch 9, dadurch gekennzeichnet, daß der Verarbeitungsschaltkreis einen ersten Schaltkreis (43) zum Bestimmen der Abklingdauer $\tau$ der Lumineszenz der kristallinen Bedeckung (22) und einen zweiten Schaltkreis (44) zur Berechnung der Temperatur der zu untersuchenden Oberfläche (9) aus den in dem Speicher (46) abgelegten Werten umfaßt.

**11.** Vorrichtung zur optischen Messung von Kryogentemperaturen nach Anspruch 9, dadurch gekennzeichnet, daß der Verarbeitungsschaltkreis (400) außerdem einen dritten Schaltkreis (45) zum Berechnen der Geschwindigkeit der Verschiebung der zu untersuchenden Oberfläche (9) umfaßt.

**12.** Vorrichtung zur optischen Messung von Kryogentemperaturen nach Anspruch 1, dadurch gekennzeichnet, daß die Meßsonde aus einem Gehäuse (20), an dessen Boden der dotierte Kristall (22) angeordnet ist, und einer metallischen Kapillare (24) besteht, die eine optische Faser (5) für die Übertragung des Lichtflusses von der Lichtquelle (1) und zur Rückübertragung der Lichtemission, zurückgeworfen durch den dotierten Kristall in dem Gehäuse in Kontakt mit dem dotierten Kristall umgibt.

**13.** Vorrichtung zur optischen Messung von Kryogentemperaturen nach Anspruch 1, dadurch gekennzeichnet, daß die Meßsonde aus einem Gehäuse (20) besteht, auf dessen Boden sich der dotierte Kristall in Form einer kristallinen Bedeckung (22) befindet, wobei eine Kapillare (24) eine optische Faser (5) für die Übertragung des Lichtflusses von der Lichtquelle (1) und zur Rückübertragung der Lichtemission, zurückgeworfen durch die kristalline Bedeckung, umgibt, angeordnet in dem Gehäuse gegenüber der Bedeckung, so daß zwischen dem Ende dieser Faser und der Bedeckung eine Kammer (26) definiert wird, und daß das Gehäuse wenigstens eine Eingangsöffnung (30, 34) für das Fluid senkrecht zur Achse der Faser und mündend in der Kammer (26) und wenigstens eine Ausgangsöffnung (32, 34) für das Fluid gegenüber der ersten umfaßt.

**14.** Vorrichtung zur optischen Messung von Kryogentemperaturen nach Anspruch 13, dadurch gekennzeichnet, daß die Meßsonde (2) eine einzige Eingangs- und Ausgangsöffnung in Form einer Öffnung (34) in dem Gehäuse (20) in Höhe der Kammer (26) aufweist.

**15.** Vorrichtung zur optischen Messung von Kryogentemperaturen nach Anspruch 13 oder Anspruch 14, dadurch gekennzeichnet, daß eine optische Linse (28) am Ausgang der Faser (5) in Höhe der Wand der Kammer (26) gegenüber der kristallinen Bedeckung (22) angeordnet ist.

**16.** Vorrichtung zur optischen Messung von Kryogentemperaturen, speziell eingerichtet für die Bestimmung der Temperatur von sich drehenden Körpern, dadurch gekennzeichnet, daß sie verwendet wird mit einer einzigen Meßsonde (200) nach Anspruch 6.

**17.** Vorrichtung zur optischen Messung von Kryogentemperaturen, speziell eingerichtet für die Bestimmung von Temperaturen von sich drehenden Körpern, dadurch gekennzeichnet, daß sie eingesetzt wird mit mehreren Meßsonden (200, 210, 220) nach Anspruch 4 oder Anspruch 6, wobei diese Sonden um den sich drehenden Körper (250) verteilt sind und voneinander einen Abstand von einem Winkel $\alpha$ einhalten.

**Claims**

**1.** A device for optically measuring the temperatures of cryogenic fluids or of moving surfaces in such fluids by analyzing the decay in the luminescence of a doped crystal, the device comprising a light source (1) for exciting said crystal, an optical fiber (4, 5, 6; 50, 51, 52, 53) for transporting the light flux emitted by said source to the crystal and for returning to a detection assembly (3) the luminescent light emitted by the crystal as a result, and a measurement probe (2; 200, 210, 220) past which the fluid or the moving surface moves, the device being characterized in that the doped crystal (22) is either constituted by a strontium fluoride doped with divalent ytterbium (SrF2:Yb2+), or by a calcium fluoride doped with divalent ytterbium (CaF2:Yb2+).

2. A device according to claim 1 for optically measuring cryogenic temperatures, and more particularly designed for measuring the temperatures of moving surfaces, the device being characterized in that said measurement probe (2, 200) is constituted by a housing (20) in which a metal capillary (24) is placed that surrounds at least one optical fiber (5; 50) for transmitting the light flux emitted by the light source (1) and for returning the light emission given off by the doped crystal, and in that the doped crystal is present in the form of a crystal covering (22) covering a determined location on the surface to be scanned (9).

3. A device according to claim 2 for optically measuring cryogenic temperatures, the device being characterized in that the measurement probe (2) further includes an optical fiber (49) for transmitting and receiving a synchronizing light emission, and in that the surface to be scanned (9) further includes at least one mark (40) reflecting said light emission and placed in the displacement direction of the surface at a determined distance from the crystal covering (22).

4. A device according to claim 2 for optically measuring cryogenic temperatures, the device being characterized in that said measurement probe includes a single bidirectional fiber (5) surrounded by a metal capillary (24), the assembly being mounted in the housing (20).

5. A device according to claim 2 or claim 3 for optically measuring cryogenic temperatures, the device being characterized in that said measurement probe includes a fiber (50) for transmitting the light flux emitted by the light source (1) and at least one receiver fiber (51, 52) for returning the light emission given off by the crystal covering (22), each of said fibers being surrounded by a metal capillary (24).

6. A device according to claim 5 in that it depends on claim 3, for optically measuring cryogenic temperatures, the device being characterized in that it includes a single receiver fiber (51).

7. A device according to claims 4, 5, or 6, for optically measuring cryogenic temperatures, the device being characterized in that the housing (20) further includes a lens (28) placed at the outlet from the optical fiber(s) (5; 49, 50, 51, 52).

8. A device according to claim 5 or claim 7 in that it depends solely on claim 5, for optically measuring cryogenic temperatures, the device being characterized in that it further includes additional focusing means (36) disposed between the probe (2) and the surface to be scanned (9) and placed at the outlet from the receiver fibers (51, 52).

9. A device according to claim 5 in that it depends on claim 3, for optically measuring cryogenic temperatures, the device being characterized in that said excitation light source (1) is controlled on the basis of a detector device (42) receiving the light flux emitted by a synchronization emitter (41) and returned by the reflecting marks (40), the detection assembly (3) receiving in succession light emissions emitted by the crystal covering (22) via each of the receiver fibers (51, 52, 53), and in that it further includes a processor circuit (400) receiving information from the light source (1), from the detection assembly (3), and from a memory (46) containing a set of predetermined values.

10. A device according to claim 9 for optically measuring cryogenic temperatures, the device being characterized in that said processor circuit includes a first circuit (43) for determining the duration τ of the decay of luminescence from the crystal covering (22), and a second circuit (44) for computing the temperature of the surface to be scanned (9) on the basis of values stored in the memory (46).

11. A device according to claim 9, for optically measuring cryogenic temperatures, the device being characterized in that the processor circuit (400) further includes a third circuit (45) for computing the displacement speed of the surface to be scanned (9).

12. A device according to claim 1 for optically measuring cryogenic temperatures, the device being characterized in that the measurement probe is constituted by a housing (20) with the doped crystal (22) being placed at the end thereof, and a metal capillary (24) surrounding an optical fiber (5) for transmitting light flux emitted by the light source (1) and for returning the light emission given off by the doped crystal, the capillary being placed in said housing in contact with the doped crystal.

13. A device according to claim 1 for optically measuring cryogenic temperatures, the device being characterized in that said measurement probe is constituted by a housing (20) having the doped crystal at the end thereof in the form of a crystal covering (22), a capillary (24) surrounding an optical fiber (5) for transmitting the light flux emitted by the light source (1), and for returning the light emission given off by the crystal covering being placed in said housing facing said covering and defining a chamber (26) between the end of said fiber and the covering, and in that the housing includes at least one fluid inlet orifice (30, 34) disposed perpendicularly to the axis of the fiber and opening out into the chamber (26) and at least one fluid outlet orifice (32, 34) opposite to the fluid inlet orifice.

14. A device according to claim 13 for optically measuring cryogenic temperatures, the device being characterized in that the measurement probe (2) includes a single inlet and outlet orifice constituted by an opening (34) passing right through the housing (20) at the chamber (26).

15. A device according to claim 13 or claim 14, for optically measuring cryogenic temperatures, the device being characterized in that a lens (28) is placed at the outlet from the fiber (5) at the wall of the chamber (26) opposite to the crystal covering (22).

16. A device for optically measuring cryogenic temperatures and more particularly adapted to determining the temperature of rotary bodies, the device being characterized in that it is implemented using a single measurement probe (200) according to claim 6.

17. A device for optically measuring cryogenic temperatures and more particularly adapted to determining the temperature of rotary bodies, the device being characterized in that it is implemented using a plurality of measurement probes (200, 210, 220) according to claim 4 or claim 6, said probes being distributed around the rotary body (250) and being spaced apart from one another by an angular interval α.

FIG.1

FIG.2

FIG.3

FIG.4

FIG.5a

FIG.5b

FIG.6

FIG.7

FIG.8

FIG.9

FIG.10

# FIG. 11

FIG.12

FIG.13

FIG.14